# EUROPEAN PATENT APPLICATION

(11) **EP 4 661 541 A1**
(43) Date of publication of application: **10.12.2025**
(21) Application number: 23919013.5
(22) Date of filing: 31.01.2023
(51) Int. Cl.: H04W 72/0446

(54) **SIGNAL SENDING OR RECEIVING METHOD AND APPARATUS, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN); GOU, Jiatong, Beijing 100085 (CN); LI, Yuanyuan, Beijing 100085 (CN)
(74) Representative: Dehns Germany Partnerschaft mbB
(86) International application number: PCT/CN2023/074047
(87) International publication number: WO 2024/159433

(57) **Abstract**

The present disclosure provides a signal sending or receiving method and apparatus, and a readable storage medium, which are applied to the technical field of wireless communications. The signal sending method executed by a network device comprises: sending a signal to a user equipment, wherein the signal comprises a plurality of bits, in a plurality of sets of sequentially arranged M bits among the plurality of bits, every M bits correspond to one time domain signal according to a mapping relationship, and the mapping relationship satisfies the following: 2^{M}-1 different sets of M non-all-zero bits are in one-to-one correspondence to 2^{M}-1 orthogonal frequency division multiplexing (OFDM) time domain signals having different amplitudes, or 2^{M}-1 different sets of M non-all-zero bits are in one-to-one correspondence to 2^{M}-1 OFDM signals having different time domain signal energy, and one set of M all-zero bits corresponds to one null time domain signal, M being a positive integer.

## Description

### TECHNICAL FIELD

The present disclosure relates to the field of wireless communication technologies, and in particular to a method and apparatus for sending or receiving a signal and a readable storage medium.

### BACKGROUND

In order to save power consumption of user equipment, a main transceiver and a low power receiver are configured in the user equipment. After putting the main transceiver into a sleep state, the user equipment can enable the low power receiver to monitor a low power wake up signal (LP WUS), and after detecting the LP WUS, the user equipment can wake up the main transceiver to receive and send data through the main transceiver. Since the power of the low power receiver is much less than that of the main transceiver, energy saving can be achieved.

### SUMMARY

The present disclosure provides a method and apparatus for sending or receiving a signal, and a readable storage medium.

In a first aspect, there is provided a method for sending a signal, which is performed by a network device, and the method includes:
sending a signal to a user equipment; where the signal includes a plurality of bits, and in a plurality of M bits that are sequentially arranged in the plurality of bits, each M bits correspond to a time domain signal according to a mapping relationship; and
where the mapping relationship satisfies that:
   2^{M} -1 different non-all-zero M bits correspond to 2^{M} -1 orthogonal frequency division multiplexing (OFDM) time domain signals with different amplitudes on a one to one basis; or the 2^{M} -1 different non-all-zero M bits correspond to 2^{M} -1 OFDM time domain signals with different time domain signal energies on a one to one basis; and
   one all-zero M-bit corresponds to one null time domain signal, M being a positive integer.

In some possible implementations, the amplitude is a maximum amplitude or average amplitude. The energy is cumulative energy in the frequency domain.

In some possible implementations, a frequency domain region of the OFDM time domain signal includes N subcarriers, the frequency domain region includes a low-frequency guard band and a high-frequency guard band, the low-frequency guard band includes X subcarriers, the high-frequency guard band includes Y subcarriers, the low-frequency guard band and the high-frequency guard band are not used to transmit information, N is an integer greater than 1, X is a positive integer, and Y is a positive integer.

In some possible implementations, a value of X is the same as a value of Y, or the value of X differs from the value of Y by 1.

In some possible implementations, the frequency domain region includes a central subcarrier, and the central subcarrier is not used to transmit information.

In some possible implementations, the N subcarriers include K subcarriers which are used to transmit at least one complex-valued symbol, and the at least one complex-valued symbol is used to determine the maximum amplitude or average amplitude of the OFDM time domain signals, or to determine the cumulative energy of the OFDM time domain signals in the frequency domain.

In some possible implementations, the complex-valued symbol is one of the following:
a Binary Phase Shift Keying (BPSK) modulation symbol;
a Quadrature Phase Shift Keying (QPSK) modulation symbol; and
a Quadrature Amplitude Modulation QAM modulation symbol.

In some possible implementations, the method further includes:
sending configuration information to the user equipment, where the configuration information is used to configure a value of the complex-valued symbol.

In some possible implementations, the OFDM time domain signal is a signal obtained by performing modulation process on the complex-valued symbol corresponding to the K subcarriers, and the modulation process includes an inverse discrete Fourier transform (IDFT).

In some possible implementations, the modulation process further includes at least one of the following:
adding a cyclic prefix (CP); or
symbol randomization process.

In some possible implementations, the method further includes:
repeatedly sending the M bits over a plurality of time domain symbols.

In some possible implementations, the signal is a low power wake up signal (LP WUS).

In a second aspect, there is provided a method for receiving a signal, performed by a user equipment, and the method includes:
receiving a signal sent by a network device, where the signal includes a plurality of bits, and in a plurality of M bits that are sequentially arranged in the plurality of bits, each M bits correspond to a time domain signal according to a mapping relationship; and
where the mapping relationship satisfies that:
   2^{M} -1 different non-all-zero M bits correspond to 2^{M} -1 orthogonal frequency division multiplexing (OFDM) time domain signals with different amplitudes on a one to one basis; or the 2^{M} -1 different non-all-zero M bits correspond to 2^{M} -1 OFDM time domain signals with different time domain signal energies on a one to one basis; and
   one all-zero M-bit correspond to one null time domain signal, M being a positive integer.

In some possible implementations, the amplitude is a maximum amplitude or an average amplitude. The energy is a cumulative energy in the frequency domain.

In some possible implementations, a frequency domain region of the OFDM time domain signal includes N subcarriers, the frequency domain region includes a low-frequency guard band and a high-frequency guard band, the low-frequency guard band includes X subcarriers, the high-frequency guard band includes Y subcarriers, the low-frequency guard band and the high-frequency guard band are not used to transmit information, N is an integer greater than 1, X is a positive integer, and Y is a positive integer.

In some possible implementations, a value of X is the same as a value of Y, or the value of X differs from the value of Y by 1.

In some possible implementations, the frequency domain region includes a central subcarrier, and the central subcarrier is not used to transmit information.

In some possible implementations, the N subcarriers include K subcarriers that are used to transmit at least one complex-valued symbol. The at least one complex-valued symbol is used to determine the maximum amplitude or average amplitude of the OFDM time domain signals, or is used to determine the accumulated energy of the OFDM time domain signals in the frequency domain.

In some possible implementations, the complex-valued symbol is one of the following:
a Binary Phase Shift Keying (BPSK) modulation symbol;
a Quadrature Phase Shift Keying (QPSK) modulation symbol; and
a Quadrature Amplitude Modulation (QAM) modulation symbol.

In some possible implementations, the method further includes:
receiving configuration information sent by the network device, where the configuration information is used to configure the value of the complex-valued symbol.

In some possible implementations, the OFDM time domain signal is a signal obtained by performing modulation process on the at least one complex-valued symbol corresponding to the K subcarriers, and the modulation process includes an inverse discrete Fourier transform (IDFT).

In some possible implementations, the modulation process further includes at least one of the following:
adding a cyclic prefix (CP); or
symbol randomization process.

In some possible implementations, the method further includes:
repeatedly receiving the M bits over a plurality of time domain symbols.

In some possible implementations, the signal is a low power wake up signal (LP WUS).

In some possible implementations, the method further includes:
performing amplitude detection on the signal, and determining the plurality of M bits that are sequentially arranged and included in the signal according to an amplitude threshold; or
performing energy detection on the signal, and determining the plurality of M bits that are sequentially arranged and included in the signal according to an energy threshold.

In a third aspect, there is provided an apparatus for sending a signal, and the apparatus includes:
a transceiving module, configured to send a signal to a user equipment; where the signal includes a plurality of bits, and in a plurality of M bits that are sequentially arranged in the plurality of bits, each M bits correspond to a time domain signal according to a mapping relationship; and
where the mapping relationship satisfies that:
   2^{M} -1 different non-all-zero M bits correspond to 2^{M} -1 orthogonal frequency division multiplexing (OFDM) time domain signals with different amplitudes on a one to one basis; or the 2^{M} -1 different non-all-zero M bits correspond to 2^{M} -1 OFDM time domain signals with different time domain signal energies on a one to one basis; and
   one all-zero M-bit correspond to one null time domain signal, M being a positive integer.

In some possible implementations, the amplitude is a maximum amplitude or average amplitude. The energy is a cumulative energy in the frequency domain.

In a fourth aspect, there is provided an apparatus for receiving a signal, and the apparatus includes:
a transceiving module, configured to receive a signal sent by a network device, where the signal includes a plurality of bits, and in a plurality of M bits that are sequentially arranged in the plurality of bits, each M bits correspond to a time domain signal according to a mapping relationship; and
the mapping relationship satisfies:
   2^{M} -1 different non-all-zero M bits correspond to 2^{M} -1 orthogonal frequency division multiplexing (OFDM) time domain signals with different amplitudes on a one to one basis; or the 2^{M} -1 different non-all-zero M bits correspond to 2^{M} -1 OFDM time domain signals with different time domain signal energies on a one to one basis; and
   one all-zero M-bit corresponds to one null time domain signal, M being a positive integer.

In some possible implementations, the amplitude is a maximum amplitude or an average amplitude. The energy is a cumulative energy in the frequency domain.

In a fifth aspect, there is provided a communication apparatus, including a processor and a memory, where:
the memory is configured to store a computer program; and
the processor is configured to execute the computer program to implement the first aspect or any possible design of the first aspect.

In a sixth aspect, there is provided a communication apparatus, including a processor and a memory, where:
the memory is configured to store a computer program; and
the processor is configured to execute the computer program to implement the second aspect or any possible design of the second aspect.

In a seventh aspect, there is provided a computer-readable storage medium, the computer-readable storage medium stores instructions, and the instructions, when being called and executed on a computer, cause the computer to perform the above first aspect or any possible design of the first aspect.

In an eighth aspect, there is provided a computer-readable storage medium, the computer-readable storage medium stores instructions, and the instructions, when being called and executed on a computer, cause the computer to perform the above second aspect or any possible design of the second aspect.

In a ninth aspect, there is provided a communication system, including a user equipment and a network device, the user equipment is configured to perform the above first aspect or any possible design of the first aspect; and the network device is configured to perform the above second aspect or any possible design of the second aspect.

In the present disclosure, considering that the receiver for receiving the signal has low energy consumption and a simple structure, in order to adapt the envelope detection capability of the receiver, M bits are used as a basic unit, so that the signal includes multiple basic units arranged in sequence, and the M bits in each basic unit correspond to a time domain signal according to a mapping relationship, so that each non-all-zero M-bit corresponds to an OFDM time domain signal, thereby generating the signal using the method for generating the OFDM signal, effectively utilizing the envelope detection capability of the receiver, and providing the receiver with a signal in a reasonable form that meets its capability.

### BRIEF DESCRIPTION OF THE DRAWINGS

The drawings described herein are used to provide a further understanding of the embodiments of the present disclosure and constitute a part of the present disclosure. The illustrative embodiments of the embodiments of the present disclosure and the description thereof are used to explain the embodiments of the present disclosure and do not constitute an improper limitation on the embodiments of the present disclosure. In the drawings:
The accompanying drawings herein are incorporated in and constitute a part of the specification, illustrate embodiments consistent with the embodiments of the present disclosure, and together with the description, serve to explain the principles of the embodiments of the present disclosure.
FIG. 1 is a schematic diagram of a wireless communication system architecture provided by an embodiment of the present disclosure;
FIG. 2 is a schematic diagram of an interaction for sending and receiving signals provided by an embodiment of the present disclosure;
FIG. 3 is a flow chart of a method for sending a signal provided by an embodiment of the present disclosure;
FIG. 4 is a flow chart of a method for receiving a signal provided by an embodiment of the present disclosure;
FIG. 5 is a structural diagram of an apparatus for receiving a signal provided by an embodiment of the present disclosure;
FIG. 6 is a structural diagram of another apparatus for receiving a signal provided by an embodiment of the present disclosure;
FIG. 7 is a structural diagram of an apparatus for sending a signal provided by an embodiment of the present disclosure; and
FIG. 8 is a structural diagram of another apparatus for sending a signal provided in an embodiment of the present disclosure.

### DETAILED DESCRIPTION

The embodiments of the present disclosure are now further explained in conjunction with the accompanying drawings and specific implementations.

Illustrative embodiments will be described in detail herein, examples of which are shown in the accompanying drawings. When the following description refers to the drawings, the same numbers in different drawings represent the same or similar elements unless otherwise indicated. The implementations described in the following illustrative embodiments do not represent all implementations consistent with the embodiments of the present disclosure. Instead, they are merely examples of devices and methods consistent with some aspects of the present disclosure as detailed in the appended claims.

The terms used in the embodiments of the present disclosure are only for the purpose of describing specific embodiments and are not intended to limit the embodiments of the present disclosure. The singular forms of "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first indication information may also be referred to as the second indication information, and similarly, the second indication information may also be referred to as the first indication information. Depending on the context, the words "if" and "in the case where" as used herein may be interpreted as "at the time of" or "when" or "in response to determining".

The embodiments of the present disclosure are described in detail below, and examples of the embodiments are shown in the accompanying drawings, where the same or similar reference numerals throughout represent the same or similar elements. The embodiments described below with reference to the accompanying drawings are illustrative and are intended to be used to explain the present disclosure, and cannot be understood as limiting the present disclosure.

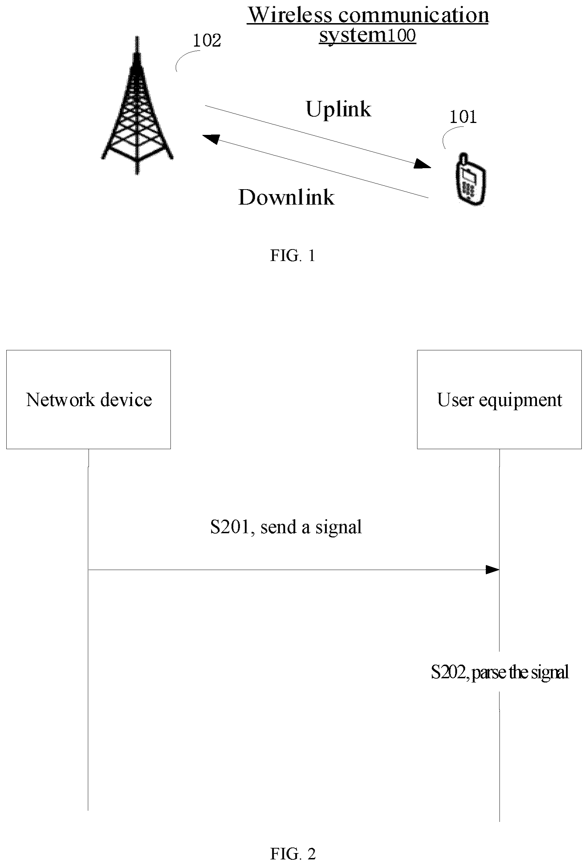

As shown in FIG. 1, the method provided in the embodiments of the present disclosure may be applied to a wireless communication system 100, which may include a user equipment 101 and a network device 102, and the number of the equipments or devices included is not limited.

It should be understood that the above wireless communication system 100 can be applied to both low-frequency scenarios and high-frequency scenarios. The application scenarios of the wireless communication system 100 include, but are not limited to, a long term evolution (LTE) system, a LTE frequency division duplex (FDD) system, a LTE time division duplex (TDD) system, a worldwide interoperability for micro wave access (WiMAX) communication system, a cloud radio access network (CRAN) system, a future 5th-generation (5G) system, a new radio (NR) communication system, a future evolved public land mobile networks (PLMN) system, or the like.

The user equipment 101 shown above may be a terminal, an access user equipment, a user equipment unit, a user equipment station, a mobile station (MS), a remote station, a remote user equipment, a mobile user equipment (mobile terminal), a wireless communication device, a user equipment agent, etc. The user equipment 101 may have a wireless transceiver function, and it can perform communication (such as wireless communication) with one or more network devices of one or more communication systems and receive network services provided by the network devices, where the network device here includes but is not limited to the illustrated network device 102.

The user equipment 101 may be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a user equipment in a future 5G network, a user equipment in a future evolved PLMN network, or the like.

For example, the network device 102 may be an access network device (or access network station). The access network device refers to a device that provides network access functions, such as a radio access network (RAN) base station, etc. Specifically, it may include a base station (BS), or a base station and a wireless resource management device for controlling the base station, etc. It may also include a relay station (relay device), an access point, and a base station in a future 5G network, a base station in a future evolved PLMN network, or an NR base station, etc. It may be a wearable device or an in-vehicle device. The network device 102 may also be a communication chip with a communication module.

Since the low power receiver in the UE has low power consumption and a simple structure, the low power receiver can parse the LP WUS by means of envelope detection, the envelope detection can be amplitude detection or energy detection, and the low power receiver can identify the information carried by the signal according to different amplitudes or different energies of the received signal. Therefore, it is considered to generate the LP WUS using the generation method of Orthogonal Frequency Division Multiplexing (OFDM) signal.

An embodiment of the present disclosure provides a method for sending and receiving a signal. FIG. 2 is a flow chart of sending and receiving the signal according to an illustrative embodiment. As shown in FIG. 2, the method includes S201 - S202.

In S201, a network device sends a signal to a UE, the signal includes a plurality of bits, and in a plurality of M bits that are sequentially arranged in the plurality of bits, each M bits correspond to a time domain signal according to a mapping relationship.

In some possible implementations, the signal includes a plurality of sets arranged in sequence, each set includes M bits, and the M bits in each set correspond to one time domain signal according to the mapping relationship.

In some possible implementations, a number of 2^{M} different M bits are involved in the mapping relationship, where the 2^{M} different M bits include 2^{M} -1 non-all-zero M bits and one all-zero M-bit.

The mapping relationship satisfies:
2^{M} -1 different non-all-zero M bits correspond to 2^{M} -1 orthogonal frequency division multiplexing (OFDM) time domain signals with different amplitudes on a one to one basis; or 2^{M} -1 different non-all-zero M bits correspond to 2^{M} -1 OFDM time domain signals with different time domain signal energies on a one to one basis; and
one all-zero M-bit corresponds to one null time domain signal, where M is a positive integer.

In some possible implementations, the amplitude is a maximum amplitude or an average amplitude. The energy is a cumulative energy in the frequency domain.

In some possible implementations, a frequency domain region of the OFDM time domain signal includes N subcarriers.

In order to prevent interference between adjacent frequency bands, the frequency domain region includes a low-frequency guard band and a high-frequency guard band, the low-frequency guard band and the high-frequency guard band are not used to transmit information, the low-frequency guard band includes X subcarriers, the high-frequency guard band includes Y subcarriers, X is an integer greater than 0, and Y is an integer greater than 0.

Since a resource block (RB) contains 12 subcarriers, for a time domain signal occupying an integer number of RBs, if the signal occupies an odd number of subcarriers, the numbers of the subcarriers respectively occupied by its high and low guard bands differ by 1, and thus the value of X differs from the value of Y by 1; if the signal occupies an even number of subcarriers, the high and low guard bands occupy the same number of subcarriers, and thus the value of X is the same as the value of Y.

The UE may use a zero intermediate frequency receiver, which may directly convert a radio frequency signal into the original transmission signal without passing through an intermediate frequency. In order to reduce the reception interference of the zero intermediate frequency receiver, the frequency domain region includes at least one central subcarrier, and the at least one central subcarrier is not used to transmit information.

If the signal occupies an even number of subcarriers, its central subcarriers may include an even number of central subcarriers, such as two central subcarriers. If the signal occupies an odd number of subcarriers, its central subcarriers may include an odd number of central subcarriers, such as one central subcarrier.

In some possible implementations, the frequency domain region of the OFDM time domain signal includes N subcarriers, the N subcarriers include K subcarriers which are used to transmit at least one complex-valued symbol. Since in the case where the network device sends OFDM time domain signals using the same power coefficient (scaling factor), multiple different complex-valued symbols correspond to different OFDM time domain signals, the at least one complex-valued symbol can be used to determine the maximum amplitude or average amplitude of the OFDM time-domain signals, or to determine the cumulative energy of the OFDM time-domain signals in the frequency domain. The complex-valued symbol can be a zero-valued symbol or a non-zero-valued symbol.

In an example, the K subcarriers are used to transmit a group of symbols, the group of symbols includes at least one complex-valued symbol, and the complex-valued symbols in the group of symbols may include two or more identical complex-valued symbols.

Each subcarrier in the K subcarriers may carry a zero-valued or non-zero complex-valued symbol.

Optionally, the complex-valued symbol is a symbol agreed upon by a protocol.

Optionally, the network device sends configuration information to the user equipment, where the configuration information is used to configure the value of the complex-valued symbol.

The complex-valued symbol is one of the following:
a Binary Phase Shift Keying (BPSK) modulation symbol;
a Quadrature Phase Shift Keying (QPSK) modulation symbol; and
a Quadrature Amplitude Modulation QAM modulation symbol.

In some possible implementations, the OFDM time domain signal is a signal obtained by performing modulation process on the at least one complex-valued symbol corresponding to the K subcarriers, and the modulation process includes an inverse discrete Fourier transform (IDFT).

Optionally, the modulation process also includes adding a cyclic prefix (CP).

For example, the OFDM time domain signal is a time domain signal obtained after the at least one complex-valued symbol corresponding to the K subcarriers is subjected to IDFT and adding a CP.

Optionally, the modulation process also includes adding symbol randomization process.

For example, the OFDM time domain signal is a time domain signal obtained after the at least one complex-valued symbol corresponding to the K subcarriers is subjected to IDFT and symbol randomization process.

Optionally, the modulation process also includes adding a CP and symbol randomization process.

For example, the OFDM time domain signal is a time domain signal obtained after the at least one complex-valued symbol corresponding to the K subcarriers is subjected to IDFT and adding a CP and symbol randomization process.

In some possible implementations, the signal includes a plurality of sets arranged in sequence, each set includes M bits, and the M bits in each set are transmitted on one OFDM time domain symbol. In order to enhance coverage, the same set may be repeatedly transmitted on multiple OFDM time domain symbols, that is, any M bits of the plurality of M bits may be repeatedly transmitted on multiple OFDM time domain symbols.

In S202, the UE parses the signal.

In some possible implementations, the UE parses each M bits included in the signal.

In some possible implementations, the UE performs amplitude detection on the signal, and determines the plurality of M bits that are sequentially arranged and included in the signal according to an amplitude threshold. The number of the amplitude threshold may be one or more.

Alternatively, the UE performs energy detection on the signal, and determines the plurality of M bits that are sequentially arranged and included in the signal according to an energy threshold. The number of the energy threshold may be one or more.

In some possible implementations, the UE determines the amplitude threshold or the energy threshold according to a synchronization signal or a training sequence applied to a receiver. The receiver is configured to receive the signal sent by the network device.

In an example, when the receiver is a LP WUS receiver, the UE determines the amplitude threshold or the energy threshold according to the synchronization signal or the training sequence applied to the LP WUS receiver.

In some possible implementations, the signal in S201 and S202 is a LP WUS signal.

In the embodiments of the present disclosure, considering that the receiver for receiving the signal has low energy consumption and a simple structure, in order to adapt the envelope detection capability of the receiver, M bits are used as a basic unit, so that the signal includes multiple basic units arranged in sequence, and the M bits in each basic unit correspond to a time domain signal according to a mapping relationship, so that each non-all-zero M-bit corresponds to an OFDM time domain signal, thereby generating the signal using the OFDM signal generation method, effectively utilizing the envelope detection capability of the receiver, and providing the receiver with a signal in a reasonable form that meets its capability.

The generation method of the LP WUS signal is illustrated below through several examples.

### Example 1:

The LP WUS signal contains 30 bits in total. The value of M is 2. Every 2 bits are transmitted in one OFDM time domain symbol, and the LP WUS signal occupies 15 time domain symbols in total.

### Example 2:

The LP WUS signal contains 30 bits in total. The value of M is 1. Each bit is transmitted in one OFDM time domain symbol, and the LP WUS signal occupies 30 time domain symbols in total.

### Example 3:

The LP WUS signal contains 30 bits in total. The value of M is 2. Every 2 bits are repeatedly transmitted on two OFDM time domain symbols, and thus the LP WUS signal occupies 30 time domain symbols in total.

### Example 4:

The LP WUS signal contains 30 bits in total. The value of M is 1. Each bit is repeatedly transmitted on two OFDM time domain symbols, and the LP WUS signal occupies 60 time domain symbols in total.

In the above examples, values of other parameters can be: N=24, L1 =6, L2=7, K=11.

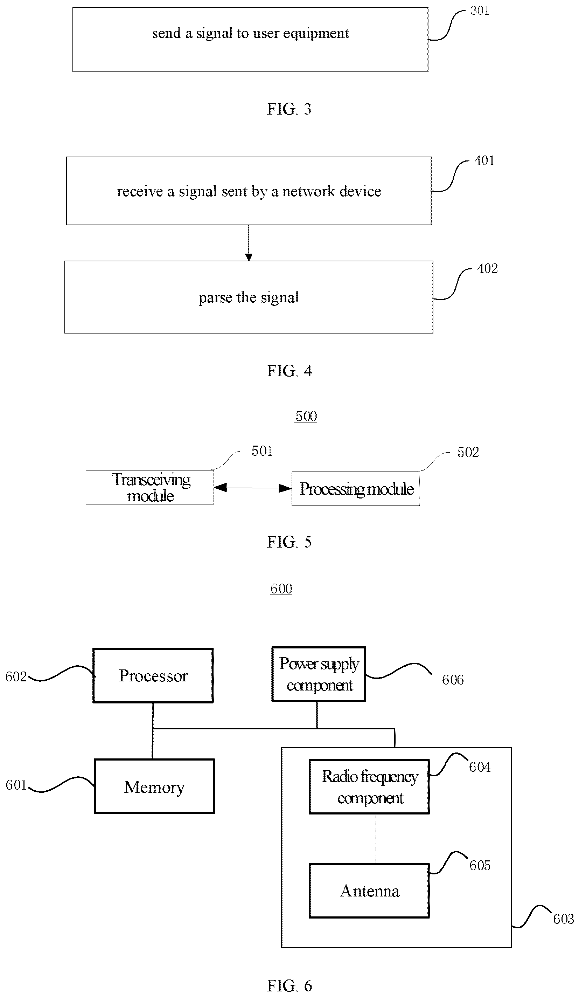

An embodiment of the present disclosure provides a method for sending a signal, which is performed by a network device. FIG. 3 is a flowchart of sending a signal according to an illustrative embodiment. As shown in FIG. 3, the method includes S301.

In S301, a signal is sent to a UE, where the signal includes a plurality of bits, and in a plurality of M bits that are sequentially arranged in the plurality of bits, each M bits correspond to a time domain signal according to a mapping relationship.

The content of S301 is the same as that of S201, please refer to S201, and the description is not repeated here.

An embodiment of the present disclosure provides a method for receiving a signal, which is performed by a UE. FIG. 4 is a flowchart of receiving a signal according to an illustrative embodiment. As shown in FIG. 4, the method includes S401-S402.

In S401, a signal sent by a network device is received, the signal includes a plurality of bits, and in a plurality of M bits that are sequentially arranged in the plurality of bits, each M bits correspond to a time domain signal according to a mapping relationship.

The content about the signal in S401 is the same as the content about the signal in S201, please refer to S201, and the description is not repeated here.

In S402, the signal is parsed.

The content of S402 is the same as that of S202, please refer to S202, and the description is not repeated here.

Based on the same concept as the above method embodiments, an embodiment of the present disclosure also provides a communication apparatus, which can have the functions of the network device in the above method embodiments, and is configured to perform the steps performed by the network device provided in the above embodiments. The functions can be implemented by hardware, or by software or hardware executing corresponding software. The hardware or software includes one or more modules corresponding to the above functions.

In a possible implementation, a communication apparatus 500 as shown in FIG. 5 may be used as the network device involved in the above method embodiments, and perform the steps performed by the network device in the above method embodiments.

The communication apparatus 500 includes a transceiving module 501 and a processing module 502.

The transceiving module 501 is configured to send a signal to a user equipment; the signal includes a plurality of bits, and in a plurality of M bits that are sequentially arranged in the plurality of bits, each M bits correspond to a time domain signal according to a mapping relationship; and
the mapping relationship satisfies:
2^{M} -1 different non-all-zero M bits correspond to 2^{M} -1 orthogonal frequency division multiplexing (OFDM) time domain signals with different amplitudes on a one to one basis; or 2^{M} -1 different non-all-zero M bits correspond to 2^{M} -1 OFDM time domain signals with different time domain signal energies on a one to one basis; and
one all-zero M-bit corresponds to one null time domain signal, where M is a positive integer.

In some possible implementations, the amplitude is a maximum amplitude or an average amplitude. The energy is a cumulative energy in the frequency domain.

In some possible implementations, a frequency domain region of the OFDM time domain signal includes N subcarriers, the frequency domain region includes a low-frequency guard band and a high-frequency guard band, the low-frequency guard band includes X subcarriers, the high-frequency guard band includes Y subcarriers, the low-frequency guard band and the high-frequency guard band are not used to transmit information, N is an integer greater than 1, X is a positive integer, and Y is a positive integer.

In some possible implementations, the value of X is the same as the value of Y, or the value of X differs from the value of Y by 1.

In some possible implementations, the frequency domain region includes a central subcarrier, and the central subcarrier is not used to transmit information.

In some possible implementations, the N subcarriers include K subcarriers that are used to transmit at least one complex-valued symbol, and the at least one complex-valued symbol is used to determine the maximum amplitude or average amplitude of the OFDM time domain signals, or to determine the cumulative energy of the OFDM time domain signals in the frequency domain.

In some possible implementations, the complex-valued symbol is one of the following:
a Binary Phase Shift Keying (BPSK) modulation symbol;
a Quadrature Phase Shift Keying (QPSK) modulation symbol; and
a Quadrature Amplitude Modulation (QAM) modulation symbol.

In some possible implementations, the transceiving module 501 is further configured to send configuration information to the user equipment, where the configuration information is used to configure the value of the complex-valued symbol.

In some possible implementations, the OFDM time domain signal is a signal obtained by performing modulation process on the complex-valued symbol corresponding to the K subcarriers, and the modulation process includes an inverse discrete Fourier transform (IDFT).

In some possible implementations, the modulation process further includes at least one of the following:
adding a cyclic prefix (CP); or
Symbol randomization process.

In some possible implementations, the transceiving module 501 is further configured to repeatedly send the M bits over a plurality of time domain symbols.

In some possible implementations, the signal is a low power wake up signal (LP WUS).

When the communication apparatus is a network device, the structure thereof can also be as shown in FIG. 6. As shown in FIG. 6, an apparatus 600 includes a memory 601, a processor 602, a transceiver component 603, and a power supply component 606. The memory 601 is coupled to the processor 602, and can be used to store programs and data necessary for the communication apparatus 600 to implement various functions. The processor 602 is configured to support the communication apparatus 600 to perform the corresponding functions in the above method, and the functions can be implemented by calling the program stored in the memory 601. The transceiver component 603 can be a wireless transceiver, which can be configured to support the communication apparatus 600 to receive signaling and/or data and send signaling and/or data through a wireless air interface. The transceiver component 603 can also be called a transceiver unit or a communication unit. The transceiver component 603 may include a radio frequency component 604 and one or more antennas 605, the radio frequency component 604 may be a remote radio unit (RRU), which can be specifically used for transmission of radio frequency signals and conversion between radio frequency signals and baseband signals, and the one or more antennas 605 can be specifically used for the radiation and reception of radio frequency signals.

When the communication apparatus 600 needs to send data, the processor 602 can perform baseband process on the data to be sent, and then the baseband signal is output to the radio frequency unit. The radio frequency unit performs radio frequency process on the baseband signal and then sends the radio frequency signal in the form of electromagnetic waves through the antenna. When data is sent to the communication apparatus 600, the radio frequency unit receives the radio frequency signal through the antenna, converts the radio frequency signal into a baseband signal, and outputs the baseband signal to the processor 602. The processor 602 converts the baseband signal into data and processes the data.

Based on the same concept as the above method embodiments, an embodiment of the present disclosure also provides a communication apparatus, which may have the functions of the UE in the above method embodiments and is configured to perform the steps performed by the UE provided in the above embodiments. The functions can be implemented by hardware, or by software or hardware executing corresponding software. The hardware or software includes one or more modules corresponding to the above functions.

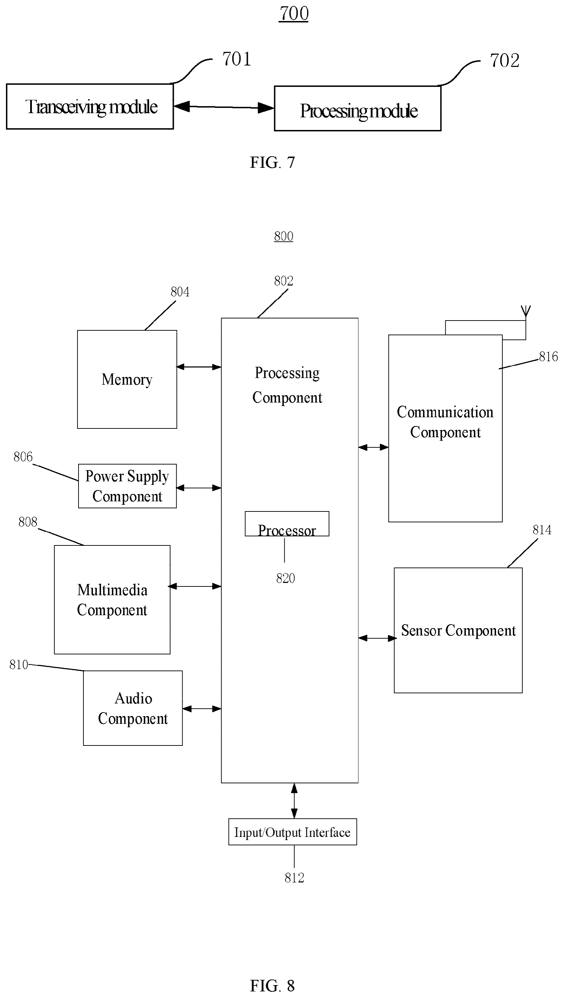

In a possible implementation, the communication apparatus 700 as shown in FIG. 7 may serve as the UE involved in the above method embodiments, and perform the steps performed by the UE in the above method embodiments.

The communication apparatus 700 includes a transceiving module 701 and a processing module 702.

The transceiving module 701 is configured to receive a signal sent by a network device, the signal includes a plurality of bits, and in a plurality of M bits that are sequentially arranged in the plurality of bits, each M bits correspond to a time domain signal according to a mapping relationship; and
the mapping relationship satisfies:
2^{M} -1 different non-all-zero M bits correspond to 2^{M} -1 orthogonal frequency division multiplexing (OFDM) time domain signals with different amplitudes on a one to one basis; or 2^{M} -1 different non-all-zero M bits correspond to 2^{M} -1 OFDM time domain signals with different time domain signal energies on a one to one basis; and
one all-zero M-bit corresponds to one null time domain signal, where M is a positive integer.

In some possible implementations, the amplitude is a maximum amplitude or an average amplitude. The energy is a cumulative energy in the frequency domain.

In some possible implementations, a frequency domain region of the OFDM time domain signal includes N subcarriers, the frequency domain region includes a low-frequency guard band and a high-frequency guard band, the low-frequency guard band includes X subcarriers, the high-frequency guard band includes Y subcarriers, the low-frequency guard band and the high-frequency guard band are not used to transmit information, N is an integer greater than 1, X is a positive integer, and Y is a positive integer.

In some possible implementations, the value of X is the same as the value of Y, or the value of X differs from the value of Y by 1.

In some possible implementations, the frequency domain region includes a central subcarrier, and the central subcarrier is not used to transmit information.

In some possible implementations, the N subcarriers include K subcarriers that are used to transmit at least one complex-valued symbol. The at least one complex-valued symbol is used to determine a maximum amplitude or an average amplitude of the OFDM time domain signals, or is used to determine a cumulative energy of the OFDM time domain signals in the frequency domain.

In some possible implementations, the complex-valued symbol is one of the following:
a Binary Phase Shift Keying (BPSK) modulation symbol;
a Quadrature Phase Shift Keying (QPSK) modulation symbol; and
a Quadrature Amplitude Modulation (QAM) modulation symbol.

In some possible implementations, the transceiving module 701 is further configured to receive configuration information sent by the network device, where the configuration information is used to configure the value of the complex-valued symbol.

In some possible implementations, the OFDM time domain signal is a signal obtained by performing modulation process on the at least one complex-valued symbol corresponding to the K subcarriers, and the modulation process includes an inverse discrete Fourier transform (IDFT).

In some possible implementations, the modulation process further includes at least one of the following:
adding a cyclic prefix (CP); or
symbol randomization process.

In some possible implementations, the transceiving module 701 is further configured to repeatedly receive the M bits over a plurality of time domain symbols.

In some possible implementations, the signal is a low power wake up signal (LP WUS).

In some possible implementations, the processing module 601 is configured to perform amplitude detection on the signal, and determine the plurality of M bits that are arranged in sequence and included in the signal according to an amplitude threshold; or perform energy detection on the signal, and determine the plurality of M bits that are arranged in sequence and included in the signal according to an energy threshold.

When the communication apparatus is a user equipment, the structure thereof may also be as shown in FIG. 8. The apparatus 800 may be a mobile phone, a computer, a digital broadcast terminal, a messaging device, a game console, a tablet device, a medical device, a fitness device, a personal digital assistant, etc.

Referring to FIG. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the apparatus 800, such as operations associated with display, phone calls, data communications, camera operations, and recording operations. The processing component 802 may include one or more processors 820 to execute instructions to complete all or part of the steps of the above methods. In addition, the processing component 802 may include one or more modules to facilitate interaction between the processing component 802 and other components. For example, the processing component 802 may include a multimedia module to facilitate the interaction between the multimedia component 808 and the processing component 802.

The memory 804 is configured to store various types of data to support operations on the apparatus 800. Examples of such data include instructions for any application or method operating on the apparatus 800, contact data, phone book data, messages, pictures, videos, etc. The memory 804 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to the various components of the apparatus 800. The power component 806 may include a power management system, one or more power supplies, and other components associated with generating, managing, and distributing power for the apparatus 800.

The multimedia component 808 includes a screen that provides an output interface between the apparatus 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the apparatus 800 is in an operating mode, such as a shooting mode or a video mode, the front camera and/or the rear camera may receive external multimedia data. Each of the front camera and rear camera may be a fixed optical lens system or have a focal length and optical zoom capability.

The audio component 810 is configured to output and/or input audio signals. For example, the audio component 810 includes a microphone (MIC), and when the apparatus 800 is in an operating mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and peripheral interface modules, such as a keyboard, a click wheel, buttons, etc. These buttons may include but are not limited to: a home button, a volume button, a start button, and a lock button.

The sensor component 814 includes one or more sensors for providing various aspects of status assessment for the apparatus 800. For example, the sensor component 814 can detect the open/closed state of the apparatus 800, the relative positioning of components, such as the display and keypad of the apparatus 800, and the sensor component 814 can also detect the position change of the apparatus 800 or a component of the apparatus 800, the presence or absence of user contact with the apparatus 800, the orientation or acceleration/deceleration of the apparatus 800, and the temperature change of the apparatus 800. The sensor component 814 may include a proximity sensor configured to detect the presence of a nearby object without any physical contact. The sensor component 814 may also include an optical sensor, such as a CMOS or CCD image sensor, for use in imaging applications. In some embodiments, the sensor component 814 may also include an accelerometer, a gyroscope sensor, a magnetic sensor, a pressure sensor, or a temperature sensor.

The communication component 816 is configured to facilitate wired or wireless communication between the apparatus 800 and other devices. The apparatus 800 can access a wireless network based on a communication standard, such as WiFi, 4G or 5G, or a combination thereof. In an illustrative embodiment, the communication component 816 receives a broadcast signal or broadcast-related information from an external broadcast management system via a broadcast channel. In an illustrative embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the apparatus 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an illustrative embodiment, a non-transitory computer-readable storage medium including instructions is also provided, such as the memory 804 including instructions, and the instructions can be executed by the processor 820 of the apparatus 800 to perform the above methods. For example, the non-transitory computer-readable storage medium can be a ROM, a random access memory (RAM), a CD-ROM, a magnetic tape, a floppy disk, an optical data storage device, etc.

Those skilled in the art will readily appreciate other implementations of the embodiments of the present disclosure after considering the specification and practicing the disclosure disclosed herein. The present disclosure is intended to cover any variations, uses, or adaptations of the embodiments of the present disclosure, which follow the general principles of the embodiments of the present disclosure and include common knowledge or conventional technical measure in the art that are not disclosed in the present disclosure. The specification and examples are to be considered as illustrative only, and the true scope and spirit of the embodiments of the present disclosure are indicated by the following claims.

It should be understood that the embodiments of the present disclosure are not limited to the precise structures described above and shown in the drawings, and various modifications and changes can be made without departing from the scope thereof. The scope of the embodiments of the present disclosure is limited only by the appended claims.

### Industrial Applicability

Considering that the receiver for receiving the signal has low energy consumption and a simple structure, in order to adapt the envelope detection capability of the receiver, M bits are used as a basic unit, so that the signal includes multiple basic units arranged in sequence, and the M bits in each basic unit correspond to a time domain signal according to a mapping relationship, so that each non-all-zero M bits correspond to an OFDM time domain signal, thereby using the OFDM signal generation method to generate the signal, effectively utilizing the envelope detection capability of the receiver, and providing the receiver with a signal in a reasonable form that meets its capabilities.

## Claims

1. A method for sending a signal, performed by a network device, the method comprising:
sending a signal to a user equipment, wherein the signal comprises a plurality of bits, and in a plurality of M bits that are sequentially arranged in the plurality of bits, each M bits correspond to a time domain signal according to a mapping relationship; and
wherein the mapping relationship satisfies:
2^{M} -1 different non-all-zero M bits correspond to 2^{M} -1 orthogonal frequency division multiplexing (OFDM) time domain signals with different amplitudes on a one to one basis; or 2^{M} -1 different non-all-zero M bits correspond to 2^{M} -1 OFDM time domain signals with different time domain signal energies on a one to one basis; and
one all-zero M-bit corresponds to one null time domain signal, M being a positive integer.

2. The method according to claim 1, wherein the amplitude is a maximum amplitude or an average amplitude, and the energy is a cumulative energy in frequency domain.

3. The method according to claim 1 or 2, wherein,
a frequency domain region of the OFDM time domain signal comprises N subcarriers, the frequency domain region comprises a low-frequency guard band and a high-frequency guard band, the low-frequency guard band comprises X subcarriers, the high-frequency guard band comprises Y subcarriers, the low-frequency guard band and the high-frequency guard band are not used to transmit information, N is an integer greater than 1, X is a positive integer, and Y is a positive integer.

4. The method according to claim 3, wherein a value of X is the same as a value of Y, or the value of X differs from the value of Y by 1.

5. The method according to claim 3, wherein the frequency domain region comprises a central subcarrier, and the central subcarrier is not used to transmit information.

6. The method according to any one of claims 3 to 5, wherein,
the N subcarriers comprise K subcarriers that are used to transmit at least one complex-valued symbol, and the at least one complex-valued symbol is used to determine a maximum amplitude or an average amplitude of the OFDM time domain signals, or is used to determine a cumulative energy of the OFDM time domain signals in frequency domain.

7. The method according to claim 6, wherein the complex-valued symbol is one of the following:
a Binary Phase Shift Keying (BPSK) modulation symbol;
a Quadrature Phase Shift Keying (QPSK) modulation symbol; and
a Quadrature Amplitude Modulation (QAM) modulation symbol.

8. The method according to any one of claims 6 to 7, wherein the method further comprises:
sending configuration information to a user equipment, wherein the configuration information is used to configure a value of the complex-valued symbol.

9. The method according to any one of claims 6 to 8, wherein,
the OFDM time domain signal is a signal obtained by performing modulation process on the complex-valued symbol corresponding to the K subcarriers, and the modulation process comprises an inverse discrete Fourier transform (IDFT).

10. The method according to claim 9, wherein the modulation process further comprises at least one of the following:
adding a cyclic prefix (CP); or
symbol randomization process.

11. The method according to any one of claims 1 to 10, wherein the method further comprises:
repeatedly sending the M bits over a plurality of time domain symbols.

12. The method according to any one of claims 1 to 11, wherein the signal is a low power wake up signal (LP WUS).

13. A method for receiving a signal, performed by a user equipment, the method comprising:
receiving a signal sent by a network device, wherein the signal comprises a plurality of bits, and in a plurality of M bits that are sequentially arranged in the plurality of bits, each M bits correspond to a time domain signal according to a mapping relationship; and
wherein the mapping relationship satisfies:
2^{M} -1 different non-all-zero M bits correspond to 2^{M} -1 orthogonal frequency division multiplexing (OFDM) time domain signals with different amplitudes on a one to one basis; or 2^{M} -1 different non-all-zero M bits correspond to 2^{M} -1 OFDM time domain signals with different time domain signal energies on a one to one basis; and
one all-zero M-bit corresponds to one null time domain signal, M being a positive integer.

14. The method according to claim 13, wherein the amplitude is a maximum amplitude or an average amplitude, and the energy is a cumulative energy in frequency domain.

15. The method according to claim 13 or 14, wherein,
a frequency domain region of the OFDM time domain signal comprises N subcarriers, the frequency domain region comprises a low-frequency guard band and a high-frequency guard band, the low-frequency guard band comprises X subcarriers, the high-frequency guard band comprises Y subcarriers, the low-frequency guard band and the high-frequency guard band are not used to transmit information, N is an integer greater than 1, X is a positive integer, and Y is a positive integer.

16. The method according to claim 15, wherein a value of X is the same as a value of Y, or the value of X differs from the value of Y by 1.

17. The method according to claim 16, wherein the frequency domain region comprises a central subcarrier, and the central subcarrier is not used to transmit information.

18. The method according to any one of claims 15 to 17, wherein,
the N subcarriers comprise K subcarriers that are used to transmit at least one complex-valued symbol, the at least one complex-valued symbol is used to determine a maximum amplitude or an average amplitude of the OFDM time domain signal, or is used to determine a cumulative energy of the OFDM time domain signal in frequency domain.

19. The method according to claim 18, wherein the complex-valued symbol is one of the following:
a Binary Phase Shift Keying (BPSK) modulation symbol;
a Quadrature Phase Shift Keying (QPSK) modulation symbol; and
a Quadrature Amplitude Modulation (QAM) modulation symbol.

20. The method according to any one of claims 17 to 19, wherein the method further comprises:
receiving configuration information sent by the network device, wherein the configuration information is used to configure a value of the complex-valued symbol.

21. The method according to any one of claims 17 to 19, wherein,
the OFDM time domain signal is a signal obtained by performing modulation process on the at least one complex-valued symbol corresponding to the K subcarriers, and the modulation process comprises an inverse discrete Fourier transform (IDFT).

22. The method according to claim 21, wherein the modulation process further comprises at least one of the following:
adding a cyclic prefix (CP); or
symbol randomization process.

23. The method according to any one of claims 14 to 22, wherein the method further comprises:
repeatedly receiving the M bits over a plurality of time domain symbols.

24. The method according to any one of claims 14 to 23, wherein the signal is a low power wake up signal (LP WUS).

25. The method according to any one of claims 14 to 24, wherein the method further comprises:
performing amplitude detection on the signal, and determining the plurality of M bits that are sequentially arranged and comprised in the signal according to an amplitude threshold; or
performing energy detection on the signal, and determining the plurality of M bits that are sequentially arranged and comprised in the signal according to an energy threshold.

26. An apparatus for sending a signal, the apparatus comprising:
a transceiving module, configured to send a signal to a user equipment, wherein the signal comprises a plurality of bits, and in a plurality of M bits that are sequentially arranged in the plurality of bits, each M bits correspond to a time domain signal according to a mapping relationship; and
wherein the mapping relationship satisfies:
2^{M} -1 different non-all-zero M bits correspond to 2^{M} -1 orthogonal frequency division multiplexing (OFDM) time domain signals with different amplitudes on a one to one basis; or 2^{M} -1 different non-all-zero M bits correspond to 2^{M} -1 OFDM time domain signals with different time domain signal energies on a one to one basis; and
one all-zero M-bit corresponds to one null time domain signal, M being a positive integer.

27. An apparatus for receiving a signal, the apparatus comprising:
a transceiving module, configured to receive a signal sent by a network device, wherein the signal comprises a plurality of bits, and in a plurality of M bits that are sequentially arranged in the plurality of bits, each M bits correspond to a time domain signal according to a mapping relationship; and
wherein the mapping relationship satisfies:
2^{M} -1 different non-all-zero M bits correspond to 2^{M} -1 orthogonal frequency division multiplexing (OFDM) time domain signals with different amplitudes on a one to one basis; or 2^{M} -1 different non-all-zero M bits correspond to 2^{M} -1 OFDM time domain signals with different time domain signal energies on a one to one basis; and
one all-zero M-bit corresponds to one null time domain signal, M being a positive integer.

28. A communication device, comprising a processor and a memory, wherein,
the memory is configured to store a computer program; and
the processor is configured to execute the computer program to implement the method according to any one of claims 1-12 or 13-25.

29. A computer-readable storage medium, having stored therein instructions, wherein the instructions, when being called and executed on a computer, cause the computer to perform the method according to any one of claims 1-12 or 13-25.

30. A communication system, comprising:
a user equipment, configured to perform the method according to any one of claims 1 to 12; and
a network device, configured to perform the method according to any one of claims 13 to 25.
